# EUROPEAN PATENT APPLICATION

(11) **EP 2 469 185 A1**
(43) Date of publication of application: **27.06.2012**
(21) Application number: 10809585.2
(22) Date of filing: 31.05.2010
(51) Int. Cl.: F24C 15/20, B01D 46/28

(54) **FILTER FOR KITCHEN SMOKE AND ODOUR EXTRACTION HOODS**

(30) Priority: 18.08.2009 ES 200930378 U
(71) Applicant: Perera Miro, José, 08290 Cerdanyola del Vallès (Barcelona) (ES)
(72) Inventor: Perera Miro, José, 08290 Cerdanyola del Vallès (Barcelona) (ES)
(74) Representative: Morgades y Manonelles, Juan Antonio
(86) International application number: PCT/ES2010/070361
(87) International publication number: WO 2011/020935

(57) **Abstract**

The invention refers to a filter for kitchens with smoke extractor hoods installed, with means inside to filter smoke and odours, such as circular brushes totally made of metal sections, preferably of stainless steel, although other materials are possible. Mechanical operations are used, doing without any type of welding; this arrangement facilitates the cleaning of the filter and reinforces its solidity, preventing grease from dripping onto other parts and the joints of different parts of the filter from being broken.

## Description

### Object of the Invention.

More specifically, the invention refers to a filter for kitchens in which smoke extractors are installed, with means inside to filter smoke and odours, such as circular brushes, built entirely of metal sections, preferably of stainless steel, although other materials are possible, using mechanical operations, without any type of welding.

### State of the Art.

On the market, there are a variety of filters, which can therefore be considered the state of the art; their main purpose is to filter smoke and odours arising from cooking food over heat, such as gas or electrical burners, and any other heat source, keeping these fumes from remaining in the kitchen or spreading from the kitchen to other rooms.

The majority of these filters are built from a frame made up of square, rectangular, or similarly-shaped sections fitting into the perimeter of the mouth of the extractor hood, where there are several slats, leaving spaces between two consecutive ones that create passageways for smoke and odours to be sucked by extractors, the smoke and odours later passing through filters and a tube to the corresponding chimney.

The sections that make up the frame are preferably welded, as are the ends of the sections or slats to the aforementioned sections of the frame.

### Scope of the Invention.

To almost entirely do away with welding as the basic operation for the building of the filters, for joining the sections of the frame to those of the slats, and replacing them, using a new design of the sections that make up the frame, as well as the joining of the ends of the slats to the aforementioned frame. This prevents one of the main problems caused by this sort of construction when welding is used for stainless steel parts, and when there are false joints caused by defects in the electrodes. This means that although all the joints seem to be welded, when they are subjected to a bit of pressure or twisting, which is normal in periodic filter-cleaning operations, the welding turns out to be false and the joints are broken, with the slats separating from the frame.

Frequent cleaning of the inside parts of the filters requires them to be separated from the mouth of the smoke and odour extractor hood, so that they can be washed, as well as in order to clean the whole frame of the filter, the frame plus the slats, and to put them back in their original tilted position and finally placed again in the mouth of the extractor hood.

It is during these cleaning operations when this welding turns out to be false, and the different parts of the filter start to separate from each other, requiring the user to have other filter units on hand to replace the damaged ones, and to send them to the workshop of the original supplier to have the separated parts welded again.

### Description of the Invention.

The invention described is made up of some head sections, two, parallel to each other, where the ends of the sections or slats placed perpendicularly to the head sections fit in, separated from each other by the corresponding passageway between every two slats.

The head sections make up a prismatic body like an inverted or open frame without an upper base, and whose single larger base has the corresponding holes. There is a short skirting that folds over itself that comes out of the base, the single larger base of the head section.

The edge of the head sections folds over on itself, creating a perimeter skirting around the base, catching the ends of the sections or slats between the two parts of the skirting. The ends of these slats have tabs that are caught between the two sides of the aforementioned skirting.

The slats are made of cross sections that are noticeably open, trapezoidal, and between two slat sections there are the filter brushes. In one of the forms, the filter brushes are made with a shaft that has a thicker part at each end, and perpendicularly there are some bristles that radiate outwards, which press down slightly on the inner side of the slat sections.

The slat sections have a hole in the surface for the purpose of letting out condensed oil and fumes, allowing them to pass through it. They are let out through the inside of the slats towards the lower part of the filter, where they flow into a horizontal channel, which doesn't form a part of the invention, as it is known on the market and therefore belongs to the state of the art.

Other details and characteristics shall be shown throughout the description below referring to drawings attached to this report which are shown for illustrative but not limiting purposes a practical embodiment of the invention.

### Description of the drawings.

Figure 1 is a ground view of the filter (10), inside of which, marked with points, there are filter brushes (11), one of them partially out of the filter (10).
Figure 2 is an elevation view of the filter (10) from one of its two heads (14).
Figure 3 is a plan view of the head (14); on its base (32), there are openings (19) for the introduction and removal of the filters (11).
Figure 4 is a plan view of the filter (10) from one of its larger bases.
Figure 5 is a section through A-A', according to figure 4.
Figure 6 is a plan view of the filter (10) from another of its larger bases.
Figure 7 is a detail through "C", according to figure 8.
Figure 8 is a partial elevation cross-section of the filter (10).

### Description of an embodiment of the invention.

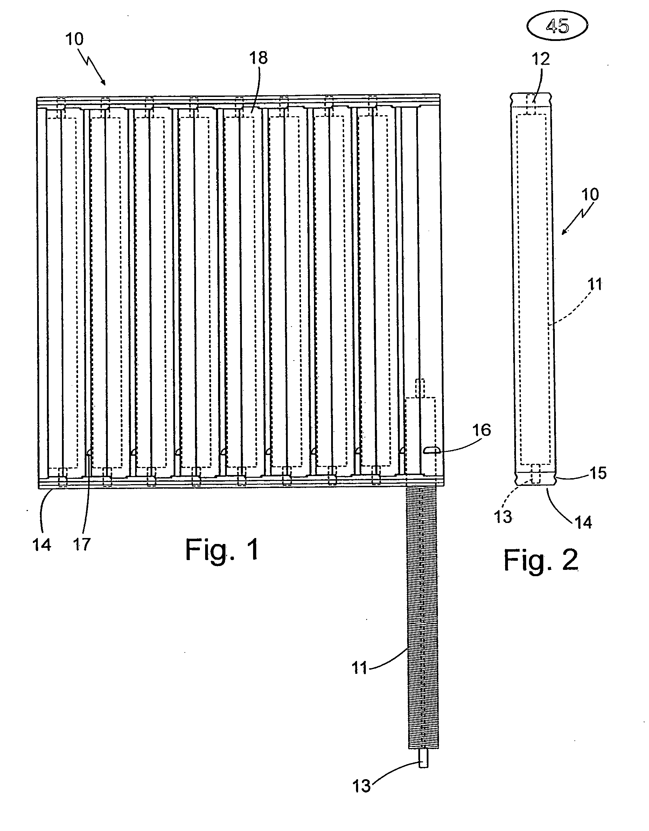

In one of the preferred embodiments of the invention, and as can be seen in figure 1, the filter (10) has a noticeably prismatic body, made of stainless steel sections (14-18), although the use of other materials is possible. In the ends of the slat sections (18) are the head sections (14), which are also prismatic and don't have an upper base; these head sections (14) are joined using slat sections (18), which come out of a first head section (14) and end in the head section (14) opposite the first, forming an open frame.

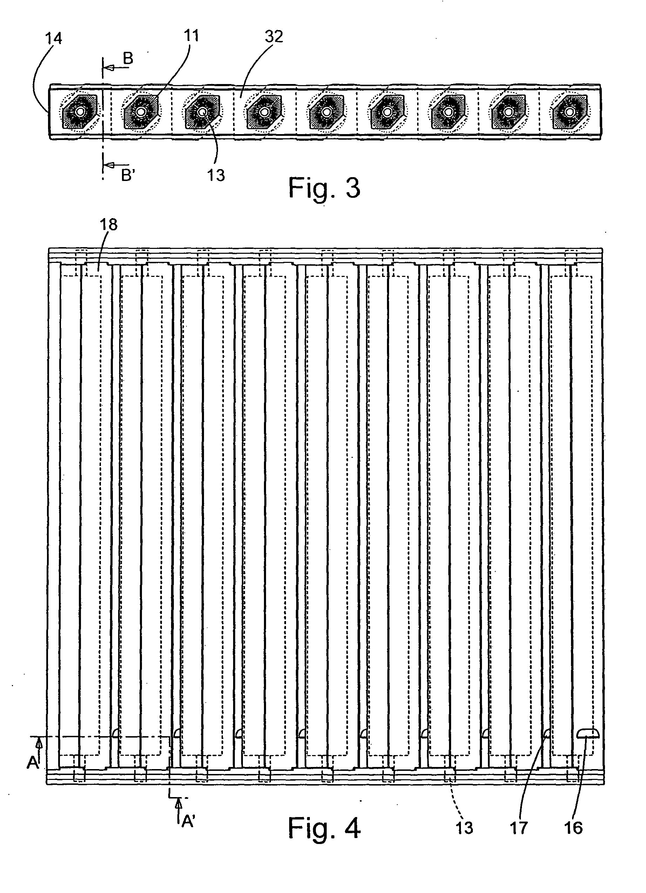

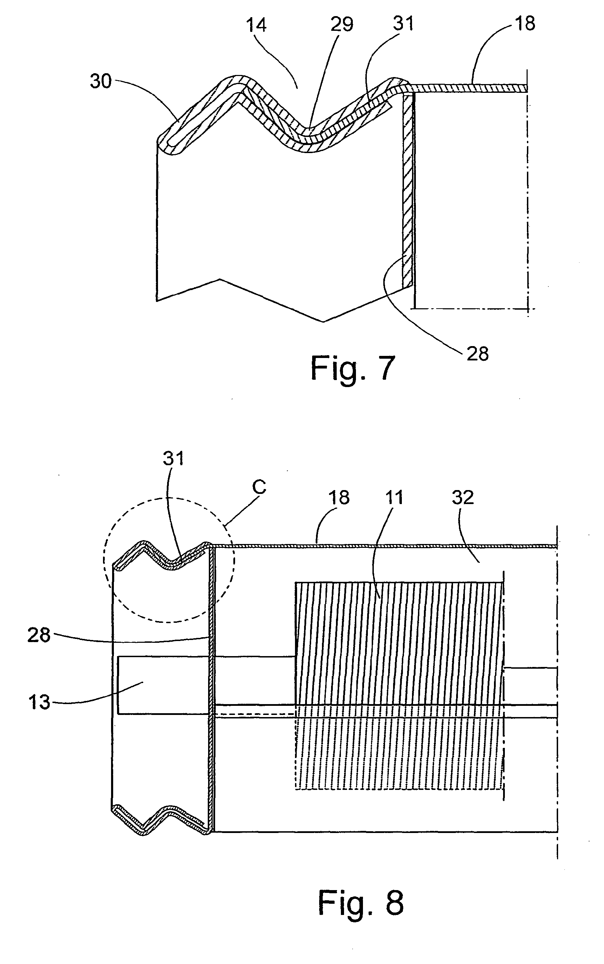

In figures 3 and 8 you can see a head section (14), with a single base (32), with aligned openings (19), whose function is to aid in the introduction and removal of filter brushes (11) to facilitate cleaning, as can be seen in figure 1, where some of the brushes (11) of the filter (10) are shown stuck partially into the filter (10) through an opening (19) in the base (32).

As can be seen in figure 2, the head sections (14) have a lengthwise depression (15) that affects both sides of the skirting (30), the function of which is described later. The head sections (14) face outwards so that the single base (32) is on the inside part, facilitating cleaning and forming what is called the inverted, open frame.

The filter brush (11) has a metal shaft (34) (see figure 8), with metal bristles or the like (35) radiating outwards; the aforementioned shaft (34) has thicker parts (13) near the ends, which make it easier to hold them to remove the brush (11) from the filter (10) and the open cavities (32).

The slat sections (18) are arranged perpendicularly to the head sections (14), as can be seen in figures 1, 4, and 6, and they are aligned parallel to each other, separated by a certain distance, so that there is a passageway (36) between one slat section (18) and the next, to facilitate the passing of the air generated by the corresponding extractor, not shown in the figures, with smoke and odours circulating through the filter brushes (11).

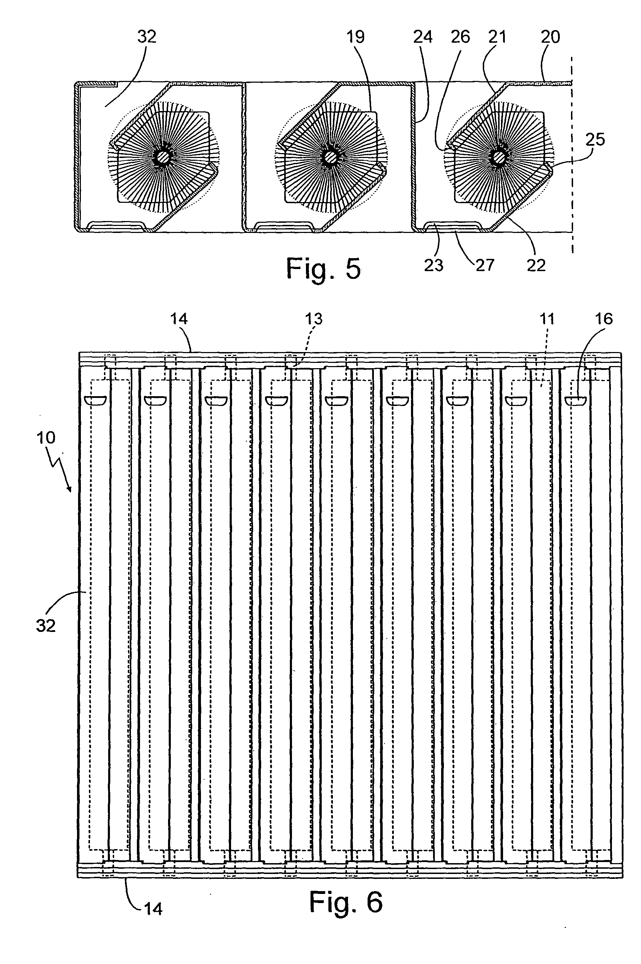

The arrangement of the slat sections (18) is that seen in figure 5, in which you can see a cross section of them, starting in a narrow horizontal part (35) that folds over at a straight angle according to a vertical part (24). It marks the height of the slat section (18) and of the filter (10), this vertical part (24) folding at a straight angle, with a horizontal part (20) that tilts downwards (21), ending in a bend (26).

The alignment of the slat sections (18) described in the previous paragraph is that seen in figure 5 itself, in which it can be seen how two slat sections (18) form an open recess (37), facilitating the placement and immobilisation of the filter brushes (11).

In order to facilitate the draining of liquids that ooze out of the filter brushes (11), there are parts (20) of the slat sections (18) with a hole (16), (see figure 6), allowing smoke and oil that condense on the slats to drain out through the aforementioned holes (16) inside the slats (18) without falling onto the food itself.

The joining of the slat sections (18) with the head sections (14) arranged at the ends of (18), is what is shown in detail in figures 7 and 8, where the tabs (31) that come out of the ends (20) stay between the two parts of the skirting (30) of the head section (14) thanks to the depression (15). As one of the main purposes of the invention, this prevents the need for welding between the ends of the slat sections (18) and the head sections (14).

Having sufficiently described this invention using the drawings attached, it is easy to understand that any modification may be made which may be deemed to be appropriate, whenever these changes do not alter the scope of the invention summarised in the following claims.

## Claims

1. **- "FILTER APPLICABLE TO SMOKE AND ODOUR EXTRACTOR HOODS FOR KITCHENS"** for filtering smoke and odours, which are built with a frame having two or more sides, two of them being joined together by head sections welded to several slats, located perpendicularly to the head sections and leaving a slat with the corresponding passageway between them. The slats contain total or partial filters, **characterised in that** the filter (10) having a noticeably prismatic body, made of stainless steel sections. At the ends of the filter (10), there are head sections (14), that are also prismatic and lacking an upper base, two of them joined by slat sections (18) going from the head section (14), to the opposite head section (14) parallel to the first, the slat sections (18) being perpendicular to the two head sections (14).

2. **- "FILTER APPLICABLE TO SMOKE AND ODOUR EXTRACTOR HOODS FOR KITCHENS"** according to the claim 1 **characterised in that** the slat sections (18) are arranged perpendicularly to the head sections (14), and are aligned parallel to each other, separated by a certain distance, so that there is a passageway (36) between one slat section (18) and the next, to facilitate the passing of the air generated by the corresponding extractor.

3. **- "FILTER APPLICABLE TO SMOKE AND ODOUR EXTRACTOR HOODS FOR KITCHENS""** according to the claim 1 **characterised in that** the head section (14) has a single base (32), with an alignment of openings (19) for the introduction and removal of filter brushes (11); in turn, the skirting (30) emerges perpendicularly from the head section (14), and its base (32), with a lengthwise depression (15).

4. **- "FILTER APPLICABLE TO SMOKE AND ODOUR EXTRACTOR HOODS FOR KITCHENS"** according to the claim 1 **characterised in that** the filter brush (11) has a metal shaft (34) with metal bristles (35), the aforementioned shaft (34) having thicker parts (13) on the ends, which make it easier to hold them to remove the brush (11) from the filter (10).

5. **- "FILTER APPLICABLE TO SMOKE AND ODOUR EXTRACTOR HOODS FOR KITCHENS"** according to the claim 1 **characterised in that** the slat sections (18) have a cross section of them, starting in a narrow horizontal part (35) that folds over at a straight angle (24). It marks the height of the slat section (18) and of the filter (10), this vertical part (24) folding at a straight angle, with a horizontal part (20) that tilts downwards (21), ending in a bend (26).

6. **- "FILTER APPLICABLE TO SMOKE AND ODOUR EXTRACTOR HOODS FOR KITCHENS"** according to the claim 1 **characterised in that**, in order for smoke and oils condensed on the surface of the slat sections to drain, there are holes (16) on parts (20) of the slat sections (18), with holes (16) that allow smoke and oil that may condense on the aforementioned surfaces of the slats (18) to run out through the holes (16), through the inside of these slats to the corresponding removal channel.

7. **- "FILTER APPLICABLE TO SMOKE AND ODOUR EXTRACTOR HOODS FOR KITCHENS"** according to the claim 1 **characterised in that** the joining of the slat sections (18) with the head sections (14) arranged at the ends of (18) is done thanks to the tabs (31) that come out from the ends (20) of the slat sections (18), which stay between the two parts of the skirting (30) of the head section (14) thanks to the depression (15).

8. **- "FILTER APPLICABLE TO SMOKE AND ODOUR EXTRACTOR HOODS FOR KITCHENS"** according to the claim 1 **characterised in that** The alignment of the slat sections (18) form an open recess (37), facilitating the placement and immobilisation of the filter brushes (11) inside the open recess (37).

## Amended claims

### Amended claims under Art. 19.1 PCT

**1. "FILTER APPLICABLE TO SMOKE AND ODOUR EXTRACTOR HOODS FOR KITCHENS"** for filtering smoke and odours using filter brushes contained inside, which are built with a frame having two or more sides, two of them being joined to several slats, located perpendicularly to the head sections and leaving a slat with the corresponding passageway between them. The slats contain total or partial filters, **characterised in that** the filter (10) having:
• slat sections (18) whose cross section, which starts in a narrow horizontal part (35), folds over at a straight angle, forming a section (24) that marks the height of the slat section (18) and that of the filter (10). The aforementioned section (24) folds downwards at a straight angle in a horizontal part (20), tilting downwards(21), ending in a bend (26). The ends of the horizontal parts (20) have tabs (31) with an angled depression (15) to join them together in the angled area (29) of the skirting (30) of the head sections (14),
• a system for attaching the slat sections (18) to the head sections (14) so that a skirting (30) comes perpendicularly out of the base (32), of the aforementioned head section (14). There is an angled shape that allows the lengthwise depression (15) to be joined to the tabs (31) of the slat sections (18), in the aforementioned angled area (29),
• holes (16) to gather condensation on the outside • holes (16) to gather condensation on the outside of the slat sections (18), which connect with the inside of the aforementioned slat sections (18).

**2. "FILTER APPLICABLE TO SMOKE AND ODOUR EXTRACTOR HOODS FOR KITCHENS"** according to the claim 1 **characterised in that** the slat sections (18) are separated in such a manner that they create an inside space between them, where the filter brushes are located (11), taking into account that the space created between the aforementioned slat sections (18) is smaller than the diameter of the filter brush (11); this provides an attaching pressure between the bristles of the filter brush (11) and the walls that make up the inside space between the slat sections (18).

**3. "FILTER APPLICABLE TO SMOKE AND ODOUR EXTRACTOR HOODS FOR KITCHENS"** according to the claim 3 **characterised in that** the filter brushes (11) have thicker parts (13) on the ends.
